Europäisches Patentamt

European Patent Office

Office européen des brevets

(11) Publication number: **0 326 102 A2**

## EUROPEAN PATENT APPLICATION

(21) Application number: 89101266.8

(22) Date of filing: 25.01.89

(51) Int. Cl.⁴: **G06F 3/02 , G06F 3/023**

(30) Priority: 27.01.88 JP 14638/88

(43) Date of publication of application:
02.08.89 Bulletin 89/31

(84) Designated Contracting States:
DE FR GB IT

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Dewa, Koichi**
**c/o Patent Division KABUSHIKI KAISHA**
**TOSHIBA**
**1-1 Shibaura 1-chome Minato-ku Tokyo**
**105(JP)**

(74) Representative: **Henkel, Feiler, Hänzel &**
**Partner**
**Möhlstrasse 37**
**D-8000 München 80(DE)**

(54) Method and apparatus for selecting a keyboard on a computer system.

(57) The selection of a keyboard on a computer system can automatically be achieved. If an externally provided keyboard (18) which transmits transmission data upon the turning on of a computer system is connected to an external keyboard controller (16), a selection circuit (14) selects that external keyboard controller (16) for controlling the externally provided keyboard (18). If, on the other hand, no externally provided keyboard (18) is connected to the external keyboard controller (16), the selection circuit (14) selects an incorporated keyboard controller (15) for controlling an incorporated keyboard (17) which is incorporated in the computer system. When the externally provided keyboard (18) is connected to the external keyboard controller (16), the selection of a keyboard by the selection circuit (14) is achieved depending upon whether or not the computer system receives transmission data from the externally provided keyboard (18).

FIG. 1

## Method and apparatus for selecting a keyboard on a computer system

The present invention relates to a method for selecting one keyboard in a lap-top type computer and apparatus for implementing the same.

In place of the conventional desk-top computer, a lap-top type computer has increasingly been employed which is compact, lightweight and convenient to carry with the user. The lap-top type computer includes, for example, a keyboard, display and floppy disk drive.

The keyboard incorporated into the lap-top type computer is made compact, but is different from a full keyboard of the aforementioned desk-top type computer in terms of the layout of keys, total number of keys and touching of the keys. Thus the keyboard of the lap-top type computer is very not user-friendly in the operation of keys.

The lap-top type computer may be used by connecting it to an externally provided full keyboard. In this case, some device will be necessary to select one of the externally provided full keyboard and that keyboard incorporated into the computer.

Thus a demand is grown for an automatic keyboard selection device.

It is accordingly the object of the present invention to provide a method and apparatus which select a keyboard on a computer system or can be selectively connected to an externally provided full keyboard.

According to one aspect of the present invention, there is provided a method for selecting a keyboard utilized for a computer system, the method comprising the steps of: determining whether or not transmission data from an externally provided keyboard is received, thereby generating a selection signal; and selecting one of a keyboard incorporated in the computer system and the externally provided keyboard in accordance with the generated selection signal.

According to another aspect of the present invention, there is to provided a computer system comprising: processing means for processing data; a first keyboard; first keyboard control means for controlling the first keyboard; a second keyboard including means for transmitting transmission data to the processing means when the computer system is powered on; second keyboard control means for controlling the second keyboard; determining means for determining whether or not the transmission data from the second keyboard is received, thereby generating a selection signal; and selecting means for selecting one of the first keyboard control means and the second keyboard control means in accordance with the selection signal generated by the determining means, thereby connecting one of the first keyboard control means and the second keyboard control means with the processing means.

This invention can be more fully understood from the following detailed description when taken in conjunction with the accompanying drawings, in which:

Fig. 1 is a schematic view showing an arrangement of a computer system having a keyboard selection apparatus according to an embodiment of the present invention; and

Fig. 2 is a flowchart for selecting one of keyboards.

The embodiment of the present invention will be explained below with reference to the accompanying drawings.

An apparatus of the present invention has the function of transmitting one or more transmission data when a computer is turned on and can widely be used for an external separate keyboard.

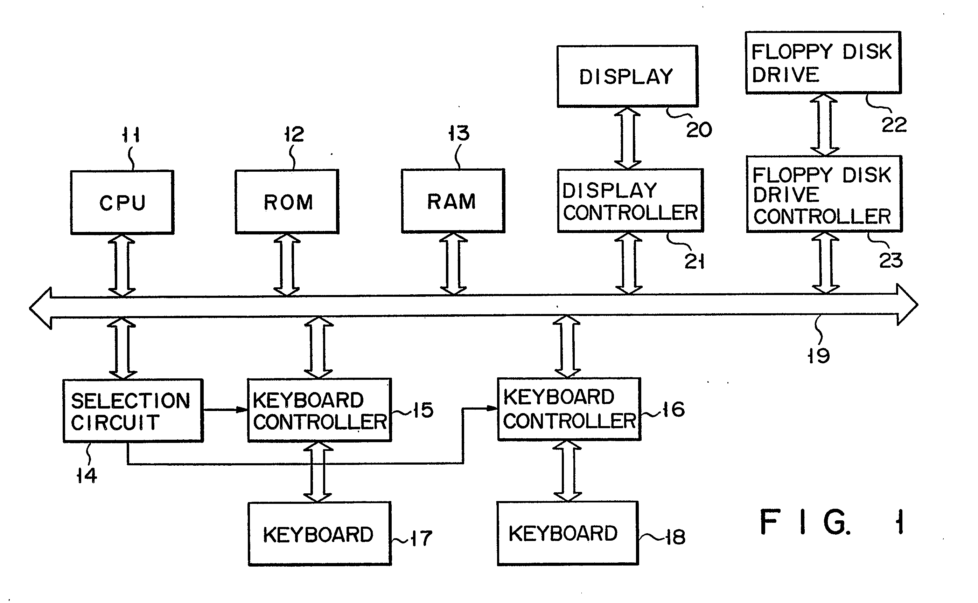

A computer system of Fig. 1 includes CPU (Central Processing Unit) 11, ROM (Read Only Memory) 12, RAM (Random Access Memory) 13, selection circuit 14, keyboard controller 15, keyboard controller 16, display controller 21 and floppy disk drive controller 23, system bus 19 connected to above elements. The computer system further includes keyboard 17 controlled by keyboard controller 15, keyboard 18 controlled by keyboard controller 16, display 20 controlled by display controller 21 and floppy disk drive 22 controlled by floppy disk drive controller 23. Keyboard 17 is incorporated in the computer system and keyboard 18 is externally connected to the computer system. Selection circuit 14 is connected to keyboard controller 15 and to keyboard controller 16.

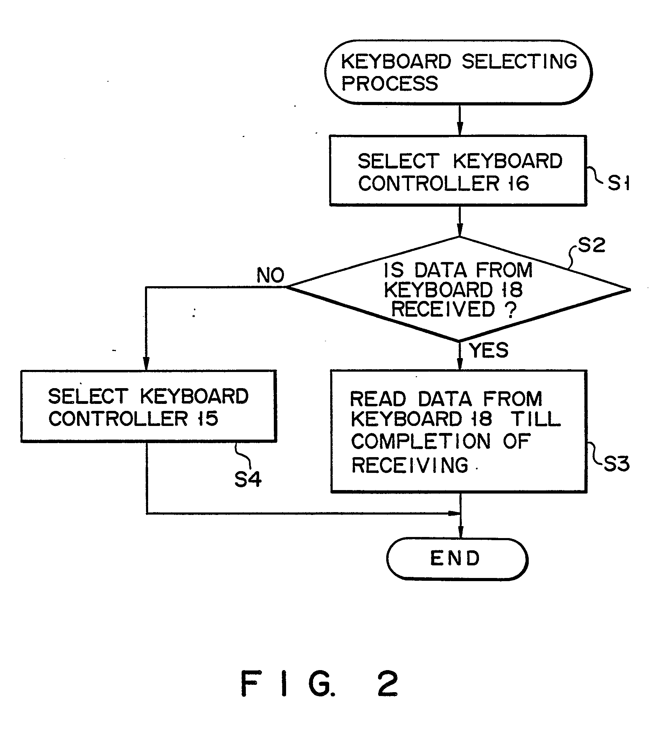

ROM 12 and RAM 13 store a keyboard selection program as shown in a flowchart of Fig. 2 and selection circuit 14 selects one of the keyboards in accordance with the keyboard selection program.

The keyboard selection processing of the present system will be explained below with reference to Fig. 2.

The keyboard selection program stored in ROM 12 or RAM 13 is executed by CPU 11, after the present system is powered on.

At step S1, selection circuit 14 selects keyboard controller 16 for controlling externally provided keyboard 18, by a command from CPU 11. It is thus possible to connect keyboard 18 to keyboard controller 16. CPU 11 supervises whether or not data is transmitted from keyboard 18. Upon receiving the data from keyboard 18 at step S2, CPU 11 determines that keyboard 18 is connected to keyboard controller 16. At step S3, all the data transmitted from keyboard 18 are received by CPU 11 via keyboard controller 16, thus completing the keyboard selection processing.

At step S2, when no data is transmitted from keyboard 18, selection circuit 14 selects keyboard controller 15 by a command from CPU 11. By the aforementioned processing, it is possible to automatically select one of the externally provided keyboard and keyboard incorporated into the computer system.

When any externally provided keyboard which transmits one or more data upon the turning on of the computer system is connected to the keyboard controller, CPU 11 allows selection circuit 14 to select the externally provided keyboard. If any externally provided keyboard is not connected to the keyboard controller, then the present system can select the keyboard controller incorporated in the computer system.

Although the present invention has been explained in connection with the embodiment of the present invention, it is not restricted to the aforementioned embodiment and can be modified in a variety of ways without departing from the spirit and scope of the present invention.

## Claims

1. A computer system characterized by:
processing means (11, 12, 13, 20, 21, 22, 23) for processing data;
a first keyboard (17);
first keyboard control means (15) for controlling the first keyboard (17);
a second keyboard (18) including means (18) for transmitting transmission data to the processing means (11, 12, 13, 20, 21, 22, 23) when the computer system is powered on;
second keyboard control means (16) for controlling the second keyboard (18); and
selecting means (14) for selecting the first keyboard control means (15) when no transmission data from the second keyboard (18) is received, thereby connecting the first keyboard control means (15) with the processing means (11, 12, 13, 20, 21, 22, 23), and selecting the second keyboard control means (16) when the transmission data from the second keyboard (18) is received, thereby connecting the second keyboard control means (16) with the processing means (11, 12, 13, 20, 21, 22, 23).

2. A computer system characterized by:
processing means (11, 12, 13, 20, 21, 22, 23) for processing data;
a first keyboard (17);

a second keyboard (18) including means (18) for transmitting transmission data to the processing means (11, 12, 13, 20, 21, 22, 23) when the computer system is powered on;
second keyboard control means (16) for controlling the second keyboard (18);
determining means (11) for determining whether or not the transmission data from the second keyboard (18) is received, thereby generating a selection signal; and selecting means (14) for selecting one of the first keyboard control means (15) and the second keyboard control means (16) in accordance with the selection signal generated by the determining means (11), thereby connecting one of the first keyboard control means (15) and the second keyboard control means (16) with the processing means (11, 12, 13, 20, 21, 22, 23).

3. The system according to claim 2, characterized in that the selecting means (14) includes:
first selecting means (14) for selecting the first keyboard control means (15) when no transmission data from the second keyboard (18) is received; and
second selecting means (14) for selecting the second keyboard control means (16) when the transmission data from the second keyboard (18) is received.

4. A method for selecting a keyboard utilized for a computer system, the method comprising the steps of:
determining whether or not transmission data from an externally provided keyboard is received, thereby generating a selection signal; and
selecting one of a keyboard incorporated in the computer system and the externally provided keyboard in accordance with the generated selection signal.

5. The method according to claim 4, characterized in that the selecting step includes the steps of:
first selecting the keyboard incorporated in the computer system when no transmission data from the externally provided keyboard is received; and
second selecting the externally provided keyboard when the transmission data from the externally provided keyboard is received.

EP 0 326 102 A2

| | | | DISPLAY | FLOPPY DISK DRIVE |
|---|---|---|---|---|
| | | | | 22 |
| 11 | 12 | 13 | 20 | |
| CPU | ROM | RAM | DISPLAY CONTROLLER | FLOPPY DISK DRIVE CONTROLLER |
| | | | 21 | 23 |

19

| SELECTION CIRCUIT | KEYBOARD CONTROLLER | KEYBOARD CONTROLLER |
|---|---|---|
| | 15 | 16 |

14

| KEYBOARD | KEYBOARD |
|---|---|
| 17 | 18 |

F I G. 1

```
           ( KEYBOARD SELECTING
             PROCESS )

                  │
                  ▼
         ┌─────────────────────┐
         │  SELECT  KEYBOARD   │
         │  CONTROLLER 16      │────  S1
         └─────────────────────┘
                  │
                  ▼                        S2
                 ╱╲
          NO   ╱    ╲   IS DATA FROM
        ◄─────╱ KEYBOARD 18 ╲
              ╲  RECEIVED ? ╱
               ╲          ╱
                 ╲      ╱
                   ╲  ╱
        │           YES
        │            │
        ▼            ▼
┌──────────────┐  ┌──────────────────┐
│SELECT KEYBOARD│  │ READ DATA FROM   │
│CONTROLLER 15 │  │ KEYBOARD 18  TILL│
└──────────────┘  │ COMPLETION OF    │
        │         │ RECEIVING        │──  S3
       S4         └──────────────────┘
        │              │
        └──────────────┤
                       ▼
                  ( END )
```

# F I G.   2